# DEMANDE DE BREVET EUROPEEN

(11) **EP 3 644 587 A1**
(43) Date de publication de la demande: **29.04.2020**
(21) Numéro de dépôt: 18202640.1
(22) Date de dépôt: 25.10.2018
(51) Int. Cl.: H04M 3/523, H04M 3/48, H04M 3/42

(54) **PROCÉDÉ ET DISPOSITIF DE PRIORISATION D'APPEL ENTRANT POUR CENTRE D'APPEL**

(71) Demandeur: Orange, 75015 Paris (FR)
(72) Inventeur: BEN ALI, Ahmed, 2041 Ettadhamen - Ariana (TN)

(57) **Abrégé**

L'invention concerne un procédé de priorisation d'un appel vocal entrant (CC-6) sur une file d'attente (CQu) de plateforme de centre d'appel, la plateforme (CCPF) comprenant un registre (ACTR) des appels vocaux précédant (CC-2, CC-3, CC-4, CC-5) ledit appel vocal entrant d'un intervalle de temps inférieur à une durée déterminée, dit registre de tickets actifs (ACTR), le procédé comprenant les étapes suivantes :
• obtention d'un identifiant (BNb, Tld) relatif à l'appel vocal entrant,
• détection, dans le registre de tickets actifs, d'un ticket actif correspondant à l'appel vocal entrant, à l'aide de l'identifiant obtenu,
• routage de l'appel vocal entrant vers la file d'attente, avec positionnement de l'appel vocal entrant à un rang inférieur au dernier rang dans la file d'attente.

## Description

### 1. Domaine de l'invention

L'invention se situe dans le domaine des centres d'appel, en particulier dans celui du traitement des appels téléphoniques entrants au niveau d'une plateforme de centre d'appel.

### 2. Etat de la technique antérieure

Un des rôles d'une plateforme de centre d'appel est de router un appel vocal entrant vers un poste de téléconseiller aussitôt que celui-ci est disponible. Lorsque tous les postes de téléconseillers sont occupés, les appels entrants sont mis en attente, puis routés dans leur ordre d'arrivée vers des postes de téléconseiller au fur et à mesure qu'ils deviennent disponibles. Les systèmes de traitement d'appels entrants selon la technique antérieure sont basés sur des files d'attente dites FIFO (First In First Out, ou premier arrivé premier servi).

Lorsque l'appel d'un client est pris par un téléconseiller, il arrive que le motif de l'appel ne puisse être entièrement traité durant la session, et qu'un complément d'information ou une action de la part du client soit nécessaire, nécessitant ultérieurement un appel supplémentaire du client au centre d'appel. Même si le motif est traité il peut aussi arriver que le client souhaite rappeler le centre d'appel, pour donner ou obtenir un complément d'information par exemple.

Il est donc fréquent qu'un client appelle un centre d'appel plusieurs fois dans la même journée, pour un même motif. Le temps d'attente dans la file d'attente de la plateforme de centre d'appel est particulièrement incommodant pour le client à partir de son deuxième appel pour un même motif, et peut même entrainer la perte de ce client pour le fournisseur de service qui est utilisateur du centre d'appel.

Un des buts de l'invention est de remédier à ces inconvénients de l'état de la technique.

### 3. Exposé de l'invention

L'invention vient améliorer la situation à l'aide d'un procédé de priorisation d'un appel vocal entrant sur une file d'attente de plateforme de centre d'appel, la plateforme comprenant un registre des appels vocaux précédant ledit appel vocal entrant d'un intervalle de temps inférieur à une durée déterminée, dit registre de tickets actifs, le procédé comprenant les étapes suivantes :
- obtention d'un identifiant relatif à l'appel vocal entrant,
- détection, dans le registre de tickets actifs, d'un ticket actif correspondant à l'appel vocal entrant, à l'aide de l'identifiant obtenu,
- routage de l'appel vocal entrant vers la file d'attente, avec positionnement de l'appel vocal entrant à un rang inférieur au dernier rang dans la file d'attente.

Le procédé proposé permet de prioriser un appel entrant sur d'autres appels en attente, lorsqu'il est associé à une entrée qui existe déjà dans un registre de tickets actifs. Ce registre comprend des informations sur des appels déjà reçus par la plate-forme dans un passé récent, concernant un dossier, un problème ou une affaire dont le statut est encore actif, c'est-à-dire non clos, non résolu ou non réglée, respectivement. Un client appelant une deuxième fois à l'intérieur de la durée déterminée ne subit donc pas une nouvelle fois une attente consécutive au positionnement de son appel au dernier rang de la file d'attente, contrairement à la technique antérieure.

Selon un aspect de l'invention, le procédé de priorisation comprend une étape préalable de création du ticket actif et de son ajout dans le registre, suite à un appel vocal entrant préalable, et une étape postérieure de suppression du ticket actif du registre au plus tard après une durée d'existence du ticket supérieure ou égale à la durée déterminée.

Grâce à cet aspect, le nombre de tickets actif dans le registre est proportionnel à la durée déterminée, et le registre de tickets actifs reste de taille réduite. Ce registre est distincte d'une base de données clients conservant l'historique de tous les clients ayant appelé le centre d'appel. L'étape de détection d'un ticket actif est ainsi accélérée, par rapport à une recherche qui serait effectuée dans la base de données clients. De plus, en raison de la taille limitée du registre de tickets actifs, Ce registre peut être intégré directement dans la plateforme de centre d'appel, au contraire d'une base de données clients qui est habituellement hébergée dans un serveur distant. La consultation du registre de tickets actifs ne nécessite donc pas que la plateforme se connecte à ce serveur par une connexion externe. La base de données clients n'a pas non plus besoin d'être modifiée ou mise à jour à cause du procédé proposé. L'application informatique utilisée par les téléconseillers pour accéder à la base de données clients n'a pas non plus besoin d'être modifiée car elle n'est pas impactée par le procédé proposé. Une application informatique séparée peut donc mettre en oeuvre le procédé proposé, automatiquement et sans forcément nécessiter d'interaction avec le téléconseiller.

Selon un aspect du procédé de priorisation, l'étape de suppression du ticket actif du registre est déclenchée par un utilisateur de la plateforme après une durée d'existence du ticket qui est inférieure à la durée déterminée.

Optionnellement, grâce à cet aspect, le téléconseiller peut décider de supprimer un ticket sans attendre l'expiration de la durée déterminée. Plusieurs raisons peuvent motiver un téléconseiller à faire cela. Par exemple, le motif du premier appel venant du client peut avoir disparu car le problème est réglé, ou le nouvel appel du client est abusif car il n'a pas respecté un délai minimum de résolution de problème avant de rappeler. Ainsi, des tickets qui n'ont plus lieu d'être sont supprimés du registre sans qu'il soit nécessaire d'attendre l'expiration de la durée d'existence maximale du ticket. La taille du registre de tickets actifs ne contient ainsi que des tickets pour lesquels un rappel éventuel du client est jugé légitime par le téléconseiller.

Selon un aspect du procédé de priorisation, un ticket actif du registre comprend au moins un numéro de ticket attribué à la création du ticket.

Si la plateforme a la capacité, par exemple à l'aide d'un menu vocal interactif et d'une reconnaissance de fréquences DTMF ou d'une reconnaissance de la parole, avant la mise en attente de l'appel, de demander au client appelant de fournir le numéro de ticket qui lui a été communiqué par le téléconseiller lors d'un appel précédent, alors le procédé utilise le numéro de ticket pour rechercher un ticket existant dans le registre. Cette possibilité a l'avantage de permettre de distinguer plusieurs tickets attribués à un même client ayant appelé plusieurs fois pour des motifs différents.

D'autres types d'identifiants peuvent aussi être demandés par la plateforme au client appelant, à la place ou en plus du numéro de ticket, comme par exemple son nom ou son numéro de client, à condition que ces types d'identifiants soient compris dans le contenu des tickets du registre.

Selon un aspect du procédé de priorisation, un ticket actif du registre comprend au moins un numéro de ligne téléphonique appelante.

Si aucune information ou précision ne doit ou ne peut être demandée par la plateforme au client ayant passé l'appel vocal entrant, la plateforme extrait le numéro de sa ligne téléphonique de la signalisation d'appel, et le procédé utilise ce numéro pour rechercher un ticket existant dans le registre. Ainsi, le procédé évite une phase de demande d'information additionnelle, et l'appel est routé plus rapidement vers la file d'attente.

Selon un aspect du procédé de priorisation, un ticket actif du registre comprend la valeur de la durée déterminée.

Grâce à cet aspect, la durée déterminée, qui est la durée de vie du ticket actif, peut être configurable par exemple en fonction de la charge de la plateforme de centre d'appel. Elle peut être identique pour tous les tickets, ou configurée individuellement par ticket en fonction du motif de l'appel, par exemple manuellement par le téléconseiller, ou automatiquement en fonction d'une ou plusieurs caractéristiques de l'appel.

Les différents aspects du procédé de priorisation qui viennent d'être décrits peuvent être mis en oeuvre indépendamment les uns des autres ou en combinaison les uns avec les autres.

L'invention concerne aussi un dispositif de priorisation d'un appel vocal entrant sur une file d'attente de plateforme de centre d'appel, comprenant:
- un registre des appels vocaux précédant ledit appel vocal entrant d'un intervalle de temps inférieur à une durée déterminée, dit registre de tickets actifs,
- un module d'obtention d'un identifiant relatif à l'appel vocal entrant,
- un module de détection, dans le registre de tickets actifs, d'un ticket actif correspondant à l'appel vocal entrant, à l'aide de l'identifiant obtenu,
- un module de routage de l'appel vocal entrant vers la file d'attente, avec positionnement de l'appel vocal entrant à un rang inférieur au dernier rang dans la file d'attente.

Un tel dispositif met en oeuvre dans tous ses modes de réalisation le procédé de signalisation qui vient d'être décrit, et peut faire partie intégrante de la plateforme de centre d'appel.

L'invention concerne encore une plateforme de centre d'appel comprenant un dispositif de priorisation conforme à celui qui vient d'être décrit.

L'invention concerne aussi un programme d'ordinateur comprenant des instructions pour la mise en oeuvre des étapes du procédé de priorisation qui vient d'être décrit, lorsque ce programme est exécuté par un processeur.

L'invention vise aussi un support d'informations lisible par une plateforme de centre d'appel, et comportant des instructions d'un programme d'ordinateur tel que mentionné ci-dessus.

Le programmes mentionné ci-dessus peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le support d'informations mentionné ci-dessus peut être n'importe quelle entité ou dispositif capable de stocker le programme. Par exemple, un support peut comporter un moyen de stockage, tel qu'une ROM, par exemple un CD ROM ou une ROM de circuit microélectronique, ou encore un moyen d'enregistrement magnétique.

Un tel moyen de stockage peut par exemple être un disque dur, une mémoire flash, etc. D'autre part, un support d'informations peut être un support transmissible tel qu'un signal électrique ou optique, qui peut être acheminé via un câble électrique ou optique, par radio ou par d'autres moyens. Un programme selon l'invention peut être en particulier téléchargé sur un réseau de type Internet.

Alternativement, un support d'informations peut être un circuit intégré dans lequel un programme est incorporé, le circuit étant adapté pour exécuter ou pour être utilisé dans l'exécution du procédé en question.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente de façon schématique une plateforme de centre d'appel comprenant un dispositif de priorisation d'appel selon un aspect de l'invention,
- la figure 2 présente un exemple de structure d'un enregistrement dans le registre de tickets actifs, selon un aspect de l'invention,
- la figure 3 présente un exemple de mise en oeuvre du procédé de priorisation d'appel selon un premier aspect de l'invention,
- la figure 4 présente un exemple de mise en oeuvre du procédé de priorisation d'appel selon un second aspect de l'invention,
- la figure 5 présente un exemple de structure d'un dispositif de priorisation d'appel selon un aspect de l'invention.

### 5. Description détaillée d'au moins un mode de réalisation de l'invention

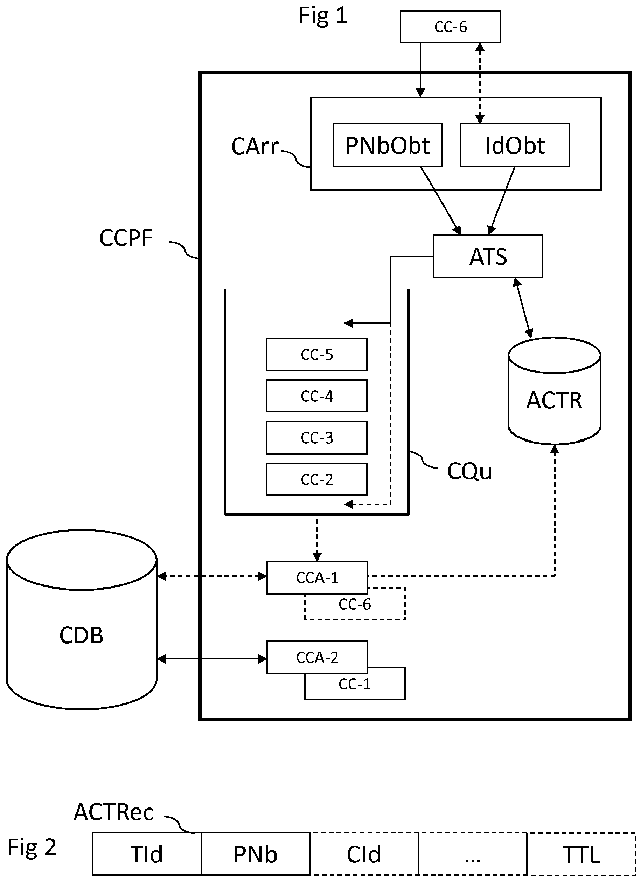

La **figure 1** présente de façon schématique une plateforme de centre d'appel comprenant un dispositif de priorisation d'appel selon un aspect de l'invention.

Par souci de simplicité, cette figure illustre un exemple avec 6 appels vocaux de clients, référencés CC-1 à CC-6, et 2 postes de téléconseillers, référencés CCA-1 et CCA-2, mais l'invention permet un nombre quelconque d'appels vocaux distribués vers un nombre quelconque de postes de téléconseillers.

Le traitement de l'appel CC-6 est détaillé ci-dessous, sachant que les appels CC-1 à CC-5 sont arrivés sur la plateforme CCPF avant lui. A l'arrivée de l'appel CC-6, le poste de téléconseiller CCA-2 traite l'appel CC-1 et le poste de téléconseiller CCA-1 n'est pas encore disponible. Les appels CC-2 à CC-5 sont dans la file d'attente d'appels CQu, en attente d'être routés vers un poste de téléconseiller disponible.

Lorsque l'appel CC-6 arrive sur la plateforme CCPF, il est pris en charge par une fonction CArr de traitement d'appel arrivant. Cette fonction diffuse par exemple un message de bienvenue à l'appelant, et l'invite éventuellement à fournir un identifiant à l'aide du clavier téléphonique. La fonction CArr comprend une sous-fonction PNbObt d'extraction de numéro de ligne appelante PNb qui récupère le numéro de téléphone associé à l'appel CC-6. La fonction CArr peut aussi comprendre une sous-fonction IdObt d'obtention d'identifiant qui récupère éventuellement un numéro fourni par le client à l'aide du clavier de son téléphone (flèche en pointillé entre Tld et CC-6). Ce numéro peut être par exemple un numéro de client Cld, ou un numéro de ticket Tld.

Le ou les identifiants obtenus, qui sont relatifs à l'appel CC-6, sont ensuite fournis à une fonction ATS de recherche dans un registre de tickets d'appel actifs ACTR. Ce registre est une liste d'enregistrements de tickets d'appel liés à des appels qui ont été reçus par la plateforme CCPF et traités au moins partiellement par un poste de téléconseiller depuis une période déterminée, par exemple dans les dernières 24 heures. La présence d'un ticket dans ce registre lui confère le statut de ticket encore "actif" qui indique simplement que le téléconseiller, ou l'application informatique utilisée par lui, n'a pas clôturé ce ticket, pour une raison quelconque.

La **figure 2** présente la structure d'un enregistrement ACTRec du registre ACTR. Chaque enregistrement ACTRec comprend un champ correspondant à un numéro de ticket Tld attribué par le poste de téléconseiller, et au moins un autre champ permettant de faire le lien entre le numéro de ticket et un appel vocal entrant, par exemple un champ correspondant au numéro de téléphone PNb utilisé par le client lors de son dernier appel vocal à la plateforme CCPF, ou un champ correspondant au numéro de contrat Cld du client (communément appelé numéro de client). Optionnellement, un champ additionnel TTL peut comprendre la durée de vie du ticket, ce qui est utile si par exemple la durée de vie attribuée par défaut (24 heure par exemple) aux tickets par le dispositif de priorisation est modifiable par ticket pour une raison quelconque (par exemple par le téléconseiller lors d'un appel). Dans une alternative simplifiée à l'extrême, un enregistrement peut ne contenir que le seul champ Tld, auquel est donnée la valeur du numéro de client Cld pour permettre au téléconseiller de retrouver le dossier complet du client sur la seule base du numéro Tld. Dans la suite, les termes "ticket" ou "enregistrement" sont interchangeables.

A l'aide du ou des identifiants obtenus relatifs à l'appel CC-6, c'est-à-dire le numéro de ligne téléphonique appelante récupéré par la sous-fonction PNb, et/ou le numéro de ticket fourni par l'appelant à la sous-fonction Tld, la fonction ATS recherche un ticket correspondant dans le registre ACTR. Si aucun ticket correspondant n'est trouvé, l'appel CC-6 est routé vers la file d'attente CQu en position normale pour une file de type FIFO, c'est-à-dire la dernière position, après l'appel CC-5 (flèche pleine entre ATS et CQu). Ce cas ne sera pas présenté plus en détail car il correspond à un traitement conforme à la technique antérieure.

Si par contre un ticket correspondant à l'appel CC-6 est trouvé dans le registre ACTR, alors l'appel CC-6 est routé vers la file d'attente CQu dans une position plus favorable c'est-à-dire inférieure au dernier rang. Dans notre exemple, La fonction ATS route dans ce cas l'appel vers la file d'attente CQu en première position, c'est-à-dire avant l'appel CC-2 (flèche en pointillé entre ATS et CQu). D'autres positions plus favorables que la dernière sont envisageables, comme par exemple un positionnement dans un rang médian, qui serait ici entre les appels CC-3 et CC-4.

Dès que le poste de téléconseiller CCA-1 devient disponible, il prend le premier appel dans la file d'attente, qui est donc maintenant l'appel CC-6, et non plus l'appel CC-2. Le traitement de l'appel CC-6 par le poste de téléconseiller CCA-1 se déroule de façon classique, hormis une interaction entre le poste de téléconseiller CCA-1 et le registre ACTR. De façon classique, le poste de téléconseiller CCA-1 enregistre des éléments pertinents relatifs à sa conversation avec le client de l'appel CC-6 dans une base de données CDB contenant les historiques des relations avec les clients. Cette base de données CDB est distincte du registre ACTR, ne fait pas partie de la plateforme de centre d'appel CCPF, et ne sera pas détaillée ici.

En plus d'agir sur la base de données CDB, le poste de téléconseiller agit sur le registre ACTR de tickets actifs lors de la création du ticket, et peut éventuellement aussi agir dessus lors de la suppression du ticket du registre. Si un ticket existait dans le registre ACTR, ce qui a justifié le positionnement favorable de l'appel CC-6 dans la file d'attente, c'est parce que ce ticket avait été créé lors d'une session passée entre le client de l'appel CC-6 et un téléconseiller, lors d'un appel précédent par le client à la plate-forme CCPF. Lors de cette session passée, un ticket a été créé, ce qui a déclenché la création d'un enregistrement correspondant dans le registre ACTR. Cette création peut être automatique, en réutilisant les identifiants récupérés par la fonction CArr (par les sous-fonctions PNbObt et/ou IdObt plus exactement) lors de l'appel précédent. Alternativement, elle peut être déclenchée par le téléconseiller, qui peut éventuellement ajouter des informations à l'enregistrement, en plus des identifiants récupérés par la fonction CArr, comme par exemple le numéro de client Cld. Dans les deux cas, le téléconseiller peut communiquer au client le numéro de ticket TId, mais ce n'est pas obligatoire, car les identifiants récupérés par la fonction CArr peuvent suffire pour la vérification ultérieure de l'existence d'un ticket dans le registre ACTR.

Lors de la session de l'appel CC-6, postérieure à la première session entre le client de l'appel et un téléconseiller de la plateforme CCPF, le poste de téléconseiller CCA-1 peut aussi agir sur le registre ACTR. En effet, le téléconseiller peut décider que rien ne justifie de laisser actif le ticket, par exemple parce que le motif initial ayant causé le premier appel a disparu. Il commande alors la suppression du ticket dans le registre ACTR, même si la durée de vie par défaut d'un ticket actif, au-delà de laquelle un ticket est automatiquement supprimé du registre (24 heures dans notre exemple), n'est pas forcément expirée. Il peut aussi décider la création d'un nouveau ticket avec un numéro différent, par exemple parce que le client lui a exposé un nouveau motif.

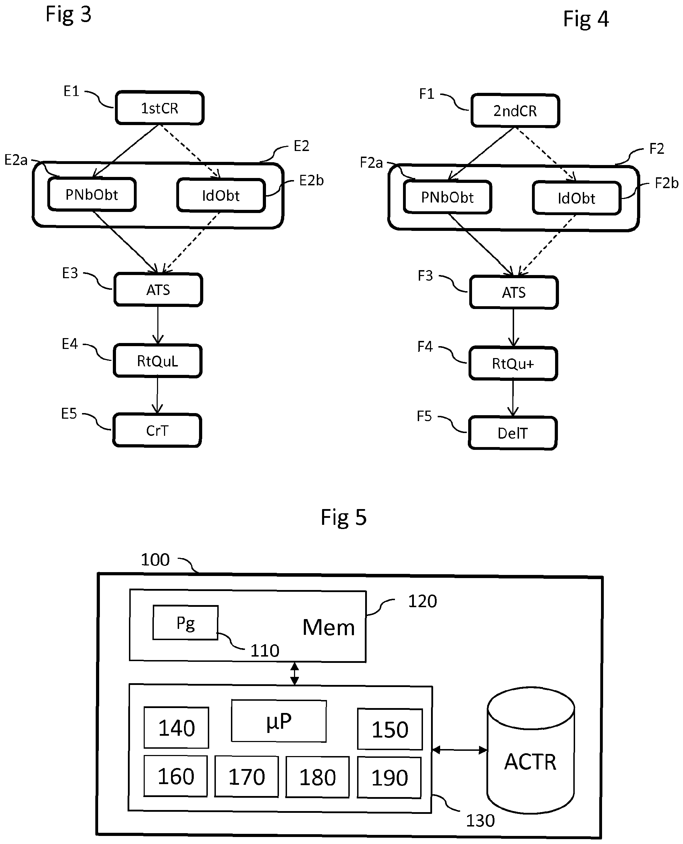

La **figure 3** présente un exemple de mise en oeuvre du procédé de priorisation d'appel selon un premier aspect de l'invention.

Ce premier aspect concerne le traitement d'un premier appel d'un client, c'est-à-dire lorsque c'est la première fois que ce client appelle la plateforme de centre d'appel pour un motif particulier.

Lors d'une étape E1, le premier appel est reçu par la plateforme, par exemple par la fonction CArr en référence à la figure 1.

Lors d'une étape E2, au moins un identifiant relatif à l'appel reçu est obtenu. Ce peut être le numéro de la ligne téléphonique appelante PNb qui est extrait de la signalisation d'appel, lors d'une sous-étape E2a, et/ou le numéro de client Cld qui est renseigné par le client à l'aide de son clavier, lors d'une sous-étape E2b.

Lors d'une étape E3, une recherche est faite dans le registre de tickets actifs ACTR, par exemple par la fonction ATS en référence à la figure 1. Comme c'est le premier appel de ce client pour ce motif, aucun enregistrement n'existe dans le registre de tickets actifs ACTR.

Comme aucun enregistrement n'est trouvé dans le registre de tickets actifs, l'appel est routé vers la file d'attente en dernière position, lors d'une étape E4.

Lors d'une étape E5, pendant le traitement de l'appel par un poste de téléconseiller, c'est-à-dire une fois que l'appel est sorti de la file d'attente, un ticket est créé et ajouté dans le registre de tickets actifs ACTR. L'enregistrement de ce ticket actif comprend les informations obtenues lors de l'étape E2, en plus d'un numéro de ticket Tld. A toutes fins utiles, ce numéro de ticket Tld peut également être communiqué au client pendant la session avec le téléconseiller, par exemple oralement.

La **figure 4** présente un exemple de mise en oeuvre du procédé de priorisation d'appel selon un second aspect de l'invention.

Ce second aspect concerne le traitement d'un appel ultérieur d'un client, c'est-à-dire lorsque ce n'est pas la première fois que ce client appelle la plateforme de centre d'appel pour un même motif.

Lors d'une étape F1, le second appel, par exemple CC-6 en référence à la figure 1, est reçu par la plateforme, par exemple par la fonction CArr en référence à la figure 1. Ce second appel est reçu après un intervalle de temps depuis le premier appel, inférieur à la durée de vie d'un ticket créé lors de ce premier appel.

Lors d'une étape F2, au moins un identifiant relatif à l'appel reçu est obtenu. Ce peut être le numéro de la ligne téléphonique appelante PNb qui est extrait de la signalisation d'appel, lors d'une sous-étape F2a identique à l'étape E2a, et/ou le numéro de ticket Tld qui est renseigné par le client à l'aide de son clavier, lors d'une sous-étape F2b. Obtenir le numéro de ticket Tld de la part du client est une option avantageuse car elle permet de retrouver l'enregistrement du ticket dans le registre ACTR, au cas où client appelle d'une ligne téléphonique différente de celle qu'il a utilisée lors du premier appel. Lors d'une étape F3, une recherche est faite dans le registre de tickets actifs ACTR, par exemple par la fonction ATS en référence à la figure 1. Comme c'est le second appel de ce client pour le même motif, et qu'il est reçu avant l'expiration de la durée de vie du ticket créé lors du premier appel, un enregistrement existe toujours dans le registre de tickets actifs ACTR.

Comme un enregistrement est trouvé dans le registre de tickets actifs, l'appel est routé vers la file d'attente dans une meilleure position que la dernière, par exemple en première position, lors d'une étape F4.

Lors d'une étape F5, pendant le traitement de l'appel par un poste de téléconseiller, c'est-à-dire une fois que l'appel est sorti de la file d'attente, et si le téléconseiller juge que le motif initial des appels du client a disparu, le ticket est supprimé du registre de tickets actifs ACTR. Autrement, le ticket n'est supprimé qu'à l'expiration d'une durée déterminée (24 heures dans notre exemple), mesurée depuis la création initiale du ticket.

En relation avec la **figure 5**, on présente maintenant un exemple de structure d'un dispositif de priorisation, selon un aspect de l'invention.

Le dispositif 100 de priorisation met en oeuvre le procédé de priorisation, dont différents modes de réalisation viennent d'être décrits.

Un tel dispositif 100 peut être mis en oeuvre dans une plateforme de centre d'appel. Par exemple, le dispositif 100 comprend une unité de traitement 130, équipée par exemple d'un microprocesseur µP, et pilotée par un programme d'ordinateur 110, stocké dans une mémoire 120 et mettant en oeuvre le procédé de priorisation selon l'invention. A l'initialisation, les instructions de code du programme d'ordinateur 110 sont par exemple chargées dans une mémoire RAM, avant d'être exécutées par le processeur de l'unité de traitement 130.

Le dispositif 100 comprend également un registre de tickets actifs ACTR. La mémoire 120 et le processeur de l'unité de traitement 130 comprennent des modules logiciels ou matériels qui sont aptes à, et configurés pour :
- obtenir (140) un identifiant relatif à l'appel vocal entrant tel qu'un numéro de ligne téléphonique appelante,
- obtenir (150) un identifiant relatif à l'appel vocal entrant tel qu'un numéro de ligne téléphonique appelante,
- détecter (160), dans le registre de tickets actifs, un ticket actif correspondant à l'appel vocal entrant, à l'aide de l'identifiant obtenu,
- router (170) l'appel vocal entrant vers la file d'attente, avec positionnement de l'appel vocal entrant à un rang inférieur au dernier rang dans la file d'attente,
- créer (180) ou supprimer (190) un ticket du registre.

Cette figure 5 illustre seulement une manière particulière, parmi plusieurs possibles, de réaliser un algorithme mettant en oeuvre le procédé de priorisation détaillé ci-dessus, en relation avec les figures 1 à 4. En effet, la technique de l'invention se réalise indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Les exemples de réalisation de l'invention qui viennent d'être présentés ne sont que quelques uns des modes de réalisation envisageables. Ils montrent que l'invention permet de réduire le temps d'attente avant le traitement d'un appel d'un client par un centre d'appel, lorsque ce n'est pas la première fois que ce client appelle la plateforme de centre d'appel pour un même motif.

## Revendications

1. **Procédé** de priorisation d'un appel vocal entrant (CC-6) sur une file d'attente (CQu) de plateforme de centre d'appel, la plateforme (CCPF) comprenant un registre (ACTR) des appels vocaux précédant (CC-2, CC-3, CC-4, CC-5) ledit appel vocal entrant d'un intervalle de temps inférieur à une durée déterminée, dit registre de tickets actifs (ACTR), le procédé comprenant les étapes suivantes :
• obtention (F2a, F2b) d'un identifiant (PNb, Tld) relatif à l'appel vocal entrant,
• détection (F3), dans le registre de tickets actifs, d'un ticket actif correspondant à l'appel vocal entrant, à l'aide de l'identifiant obtenu,
• routage (F4) de l'appel vocal entrant vers la file d'attente, avec positionnement de l'appel vocal entrant à un rang inférieur au dernier rang dans la file d'attente.

2. **Procédé** de priorisation selon la revendication 1, comprenant une étape préalable (E5) de création du ticket actif et de son ajout dans le registre, suite à un appel vocal entrant préalable, et une étape postérieure (F5) de suppression du ticket actif du registre au plus tard après une durée d'existence du ticket supérieure ou égale à la durée déterminée.

3. **Procédé** de priorisation selon la revendication 2, où l'étape de suppression du ticket actif du registre est déclenchée par un utilisateur de la plateforme après une durée d'existence du ticket qui est inférieure à la durée déterminée.

4. **Procédé** de priorisation selon l'une des revendications précédentes, où un ticket actif du registre comprend au moins un numéro de ticket (Tld) attribué à la création du ticket.

5. **Procédé** de priorisation selon l'une des revendications précédentes, où un ticket actif du registre comprend au moins un numéro de ligne téléphonique appelante (PNb).

6. **Procédé** de priorisation selon l'une des revendications précédentes, où un ticket actif du registre comprend la valeur de la durée déterminée (TTL).

7. **Dispositif** de priorisation d'un appel vocal entrant (CC-6) sur une file d'attente (CQu) de plateforme de centre d'appel (CCPF), comprenant:
• un registre (ACTR) des appels vocaux précédant ledit appel vocal entrant d'un intervalle de temps inférieur à une durée déterminée, dit registre de tickets actifs,
• un module (140, 150) d'obtention d'un identifiant relatif à l'appel vocal entrant,
• un module (160) de détection, dans le registre de tickets actifs, d'un ticket actif correspondant à l'appel vocal entrant, à l'aide de l'identifiant obtenu,
• un module (170) de routage de l'appel vocal entrant vers la file d'attente, avec positionnement de l'appel vocal entrant à un rang inférieur au dernier rang dans la file d'attente.

8. **Plateforme de centre d'appel** comprenant un dispositif conforme à la revendication 7.

9. **Programme d'ordinateur**, comprenant des instructions pour la mise en oeuvre des étapes du procédé de priorisation selon la revendication 1, lorsque ce programme est exécuté par un processeur.

10. **Support d'informations** lisible par une plateforme de centre d'appel, et comportant des instructions d'un programme d'ordinateur conforme à la revendication 9.
